# EUROPEAN PATENT SPECIFICATION

(11) **EP 4 378 620 B1**
(45) Date of publication and mention of the grant of the patent: **21.10.2026**
(21) Application number: 23835895.6
(22) Date of filing: 07.07.2023
(51) Int. Cl.: B23K 31/12, B23K 26/044, B23K 26/082, B23K 26/26, H01M 50/209, H01M 50/516, B23K 101/38

(54) **WELDING MACHINE AND METHOD FOR WELDING A PLURALITY OF MATERIALS ARRANGED TO BE IN CONTACT, AND DEVICES FOR MANUFACTURING A BATTERY CELL OR A BATTERY MODULE WITH SUCH WELDING MACHINE**
SCHWEISSMASCHINE UND VERFAHREN ZUM VERSCHWEISSEN MEHRERER MATERIALIEN, DIE IN KONTAKT STEHEN SOLLEN, SOWIE VORRICHTUNGEN ZUR HERSTELLUNG EINER BATTERIEZELLE ODER EINES BATTERIEMODULS MIT EINER SOLCHEN SCHWEISSMASCHINE
MACHINE À SOUDER ET PROCÉDÉ DE SOUDAGE DE PLUSIEURS MATÉRIAUX MIS EN CONTACT, ET DISPOSITIFS DE FABRICATION D'UNE CELLULE DE BATTERIE OU D'UN MODULE DE BATTERIE AVEC UNE TELLE MACHINE À SOUDER

(30) Priority: 08.07.2022 KR 20220084675; 26.06.2023 KR 20230082154
(43) Date of publication of application: 05.06.2024
(73) Proprietor: LG Energy Solution, Ltd., Seoul 07335 (KR)
(72) Inventor: LEE, Chang-Je, Daejeon 34122 (KR); KANG, Min-Jae, Daejeon 34122 (KR); OH, Na-Hee, Daejeon 34122 (KR)
(74) Representative: Plasseraud IP
(86) International application number: PCT/KR2023/009710
(87) International publication number: WO 2024/010429

(56) References cited:
- DE-A1- 102020 210 778
- JP-A- 2019 058 942
- KR-A- 20130 111 738
- KR-A- 20150 123 103
- KR-A- 20210 058 478
- KR-A- 20210 058 478
- KR-A- 20210 075 193
- KR-B1- 102 224 371
- KR-B1- 102 224 371
- US-A1- 2018 264 600
- US-A1- 2021 023 656

## Description

The present invention relates to a welding device for welding a plurality of materials arranged to be in contact, a device for manufacturing a battery cell comprising such welding device, a device for manufacturing a battery module comprising such welding device, and a welding method using such welding device, see claims 1 and 9-11 respectively.

### BACKGROUND ART

Welding technology is widely used in various industrial fields. For example, in the battery field, welding technology is applied to welding between battery module cases or between leads and bus bars.

Welding is the coupling of two or more members or parts, and it is necessary to secure a certain level or higher of welding quality so that the coupling state may be maintained reliably. However, according to the conventional welding method, welding quality is often not secured stably.

In particular, the electrode leads of battery cells and bus bars may be coupled by laser welding. Also, the frame and end plate of a battery module or a battery module case may be coupled by laser welding. In this case, if the welding object is not placed precisely on the welding device or is misaligned, the welding work line may be deviated. Therefore, it is necessary to increase the accuracy of welding by appropriately calibrating or updating the welding work line before welding.

Documents DE 10 2020 210778 A1 (describing the preamble of claim 1), and US 2018/264600 A1 disclose welding units with scan lasers and welding lasers.

### DISCLOSURE

### Technical Problem

The present invention is designed to solve the above-described problems and other problems.

In particular, an object of the present invention is to provide a welding device capable of increasing welding accuracy.

Another object of the present invention is to provide a welding device capable of inspecting welding quality in real time while welding is in progress.

### Technical Solution

A welding device according to the present invention for achieving the above-described object is a welding device in accordance with claim 1.

In addition, the processor may be configured to measure a distance between the focus at which the scanner is aimed and the scanner.

In addition, the processor may calibrate the preset welding work line based on coordinate information obtained by scanning the boundaries of the plurality of materials.

In addition, the processor may be configured to control the welding laser and the scanner to form a keyhole, and to control the scan laser and the galvo module to scan around the keyhole.

In addition, at least one of the plurality of materials may be a frame of a battery module.

In addition, the first material may be a bus bar, and the second material may be an electrode lead of a battery cell.

In addition, the jig may be configured to press the electrode lead, and a hole may be formed to penetrate in a vertical direction, wherein the hole may be configured to expose at least a portion of the electrode lead and at least a portion of the bus bar.

In addition, the processor may be configured to calibrate the preset welding work line based on coordinate information obtained by scanning the boundary of the bus bar and the electrode lead.

In addition, the jig may include a first part pressing the electrode lead; and a second part facing the first part.

In addition, the processor may calibrate the preset welding work line based on coordinate information obtained by scanning the first part and the second part.

Further a device for manufacturing a battery cell according to the present invention is defined in claim 9, which includes the welding device according to the present invention,

In addition, a device for manufacturing a battery module according to the present invention is defined in claim 10, which includes the welding device according to the present invention.

In addition, a welding method according to the present invention is defined in claim 11, which uses the welding device according to the present invention.

### Advantageous Effects

According to at least one of the embodiments of the present invention, welding accuracy may be improved.

According to at least one of the embodiments of the present invention, welding accuracy may be improved by appropriately calibrating or updating the welding work line even if the welding object is misaligned.

According to at least one of the embodiments of the present invention, welding defects may be quickly and accurately sensed.

### DESCRIPTION OF DRAWINGS

The accompanying drawings illustrate a preferred embodiment of the present invention, and together with the foregoing disclosure, serve to provide further understanding of the technical features of the present invention, and thus the present disclosure is not construed as being limited to the drawing.
FIG. 1 is a view showing a partial configuration of a welding device.
FIG. 2 is a view schematically showing an optical configuration of a welding device.
FIG. 3 is an exploded view showing a partial configuration of a battery module welded by a welding device.
FIG. 4 is a perspective view showing the battery module of FIG. 3.
FIG. 5 is an exploded view showing a partial configuration of another battery module welded by a welding device.
FIG. 6 is a perspective view showing the battery module of FIG. 5.
FIG. 7 is a view showing an example in which a battery module is scanned by a welding device.
FIG. 8 is a view showing an example in which a welding line is calibrated by a welding device.
FIG. 9 is a view showing an example in which a battery module is welded by a welding device.
FIG. 10 is a view showing an example in which a welding portion is inspected by a welding device.
FIG. 11 is a view showing a bus bar and an electrode lead welded by a welding device.
FIG. 12 is a view showing a bus bar and an electrode lead aligned by a welding device.
FIG. 13 is a view showing a bus bar and an electrode lead scanned by a welding device.
FIG. 14 is a view showing an example in which a welding line is calibrated by a welding device;
FIG. 15 is a view showing a bus bar and an electrode lead scanned by a welding device.
FIG. 16 is a view showing an example in which a welding line is calibrated by a welding device.
FIG. 17 is a view showing a bus bar and an electrode lead scanned by a welding device.
FIG. 18 is a view showing an example in which a welding line is calibrated by a welding device.

### BEST MODE

Hereinafter, preferred embodiments will be described in detail with reference to the accompanying drawings.

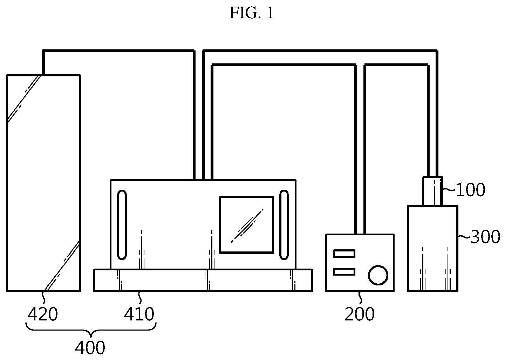

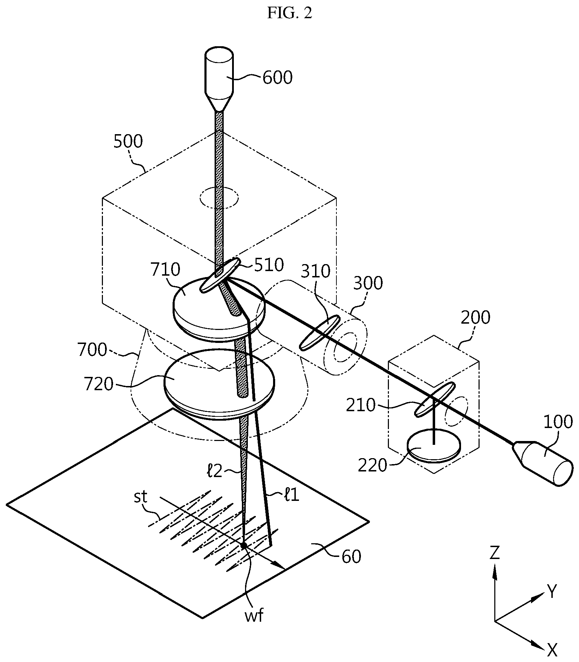

FIG. 1 is a view showing a partial configuration of a welding device. FIG. 2 is a view schematically showing an optical configuration of a welding device. Referring to FIGS. 1 and 2, a welding device is a welding device for welding a plurality of materials 60 arranged to be in contact Also, the welding device includes a scanner 500, a welding laser 600, a galvo module 300, a scan laser 100, and a processor 400.

The plurality of materials 60 may be disposed to be in contact for butt welding, edge welding, fringe welding, or overlap welding. The meaning of contact refers to the positional relationship of the plurality of materials 60 for welding, and the type of welding joint is not limited.

The scanner 500 is configured to deflect light. The scanner 500 may include a scan mirror 510 therein. The scan mirror 510 may deflect light incident on the scanner 500. Also, the scan mirror 510 may be configured to be rotatable. The scan mirror 510 may be configured to deflect light in various directions.

The welding laser 600 outputs light 12. The welding laser 600 emits light l2 toward the scanner 500. The light l2 emitted by the welding laser 600 has an intensity high enough to weld the plurality of materials 60.

The galvo module 300 is configured to deflect light. The galvo module 300 may include a galvo mirror 310 therein. The galvo mirror 310 may deflect light incident on the galvo module 300. In addition, the galvo mirror 310 may be configured to be rotatable. The galvo mirror 310 may be configured to deflect light in various directions. Also, the galvo module 300 may be configured to deflect the incident light toward the scanner 500. In addition, the galvo module 300 may be configured to be fastened, coupled, fixed, or assembled to one side of the scanner 500.

The scan laser 100 outputs light l1. The scan laser 100 emits light l1 toward the galvo module 300. The light 11 emitted by the scan laser 100 may have a weaker intensity than the light l2 emitted by the welding laser 600. In addition, the scan laser 100 may output light 11 having a wavelength different from that of the welding laser 600. For example, the scan laser 100 may output visible light. The scan laser 100 may output light 11 for scanning the shape, location, surface, or boundary of the plurality of materials 60. In addition, the scan laser 100 may be configured to scan around the focus of the light l2 emitted by the welding laser 600.

The processor 400 may be configured to include a first control computer 410 and a second control computer 420. The first control computer 410 may be physically, electrically, or optically connected to at least one of the scanner 500, the welding laser 600, the scan laser 100, or the galvo module 300. The first control computer 410 may be configured to monitor or control at least one of the scanner 500, the welding laser 600, the scan laser 100, or the galvo module 300. The second control computer 420 may be physically, electrically, or optically connected to the first control computer 410. The second control computer 420 may be configured to monitor or control the first control computer 410. In addition, the second control computer 420 may include an interface unit capable of receiving commands from a user. The processor 400 may be used to refer to the first control computer 410 and the second control computer 420.

The processor 400 is configured to scan the boundaries of the plurality of materials 60 by controlling at least one of the scanner 500 and the galvo module 300. In this case, the processor 400 may turn off the output of the welding laser 600 and turn on the output of the scan laser 100. The processor 400 may scan the boundaries of the plurality of materials 60 before welding the plurality of materials 60.

The processor 400 may scan, detect, sense, or recognize a welding work line before welding. The processor 400 may perform a more sophisticated welding operation by scanning the boundaries of the plurality of materials 60.

Referring to FIGS. 1 and 2, the welding device further includes an optical module 200 or a condensing module 700.

The scan laser 100 emits light l1 toward the optical module 200. The optical module 200 outputs, deflects, or passes at least a portion of the incident light toward the galvo module 300. The optical module 200 may be configured to include a beam splitter 210, a reference mirror 220, and a detector (not shown). The beam splitter 210 may output, deflect, or pass at least a portion of the light incident on the optical module 200 toward the galvo mirror 310. In addition, the beam splitter 210 may output, deflect, or pass at least a portion of the light incident on the optical module 200 toward the reference mirror 220. The reference mirror 220 may be configured to reflect the incident light toward the detector. The processor 400 may be configured to acquire optical coherence tomography (OCT) through the optical module 200.

The condensing module 700 may be configured to be fastened, coupled, fixed, or assembled to one side of the scanner 500. The condensing module 700 may be configured to include a first condensing lens 710 and a second condensing lens 720. The condensing module 700 may be configured to focus light deflected by the scanner 500 toward a plurality of materials. The light l2 output from the welding laser 600 and the light l1 output from the scan laser 100 may be focused on the plurality of materials 60 through the condensing module 700.

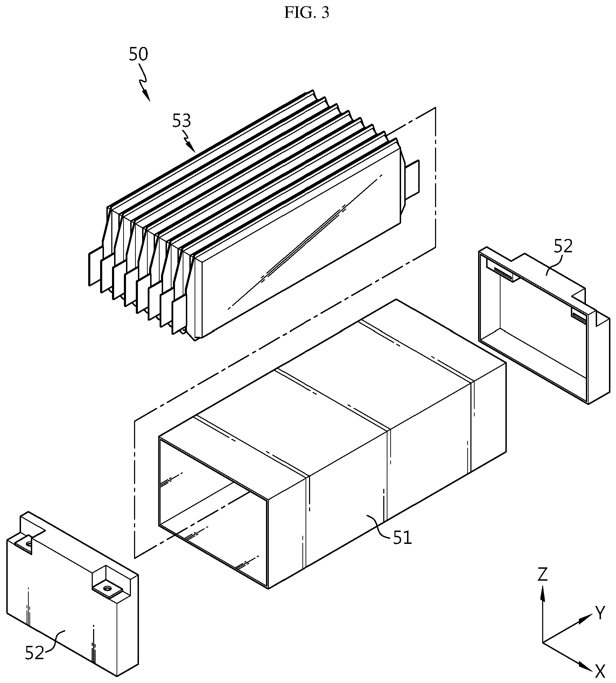

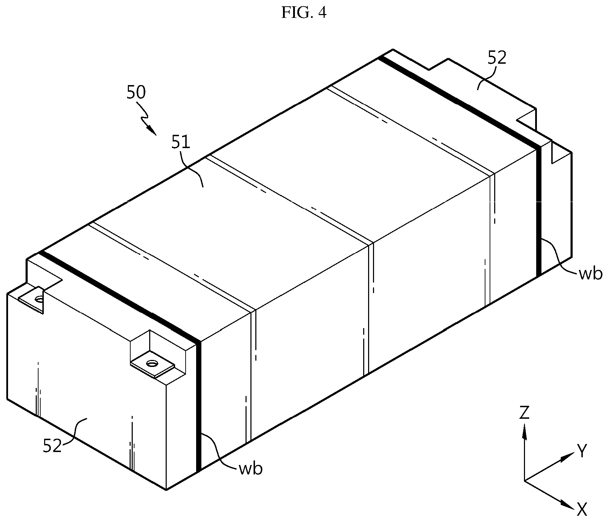

FIG. 3 is an exploded view showing a partial configuration of a battery module 50 welded by a welding device. FIG. 4 is a perspective view showing the battery module 50 of FIG. 3. Referring to FIGS. 3 and 4, a battery module 50 welded by a welding device includes a frame 51, an end plate 52, and a plurality of cells 53.

The frame 51 may have a rectangular parallelepiped shape that is open in the vertical direction, in the front-rear direction, or in the Y-axis direction. Also, the frame 51 may provide space therein. The frame 51 may be made of a metal material.

The end plate 52 may be fastened, coupled, or fixed to the frame 51 on the front side and the rear side, respectively. The end plate 52 and the frame 51 may be coupled through welding. A welding line wb or a welding portion wb may be formed along the perimeter of the end plate 52, the perimeter of the front side of the frame 51, or the perimeter of the rear side of the frame 51.

A plurality of battery cells 53 may be accommodated in an inner space of the frame 51. The plurality of battery cells 53 may refer to secondary batteries. The plurality of battery cells 53 may be secondary batteries having a pouch shape. The plurality of battery cells 53 may be configured to be stacked inside the frame 51.

The welding device is configured to form a welding line wb or a welding portion wb of the battery module 50.

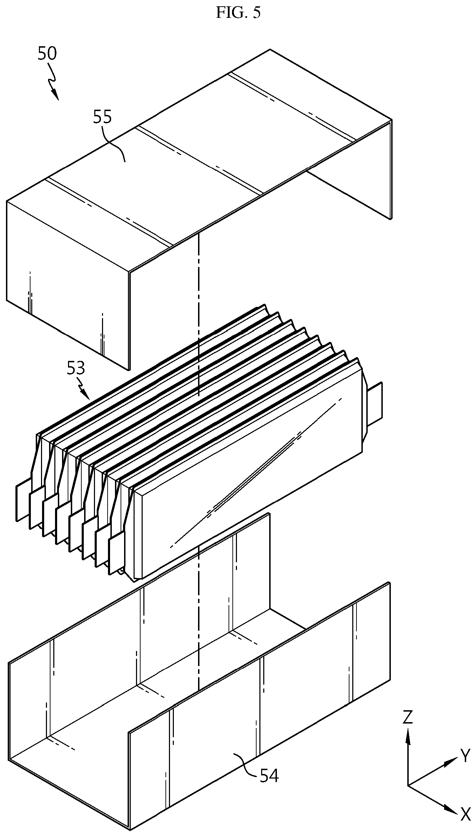

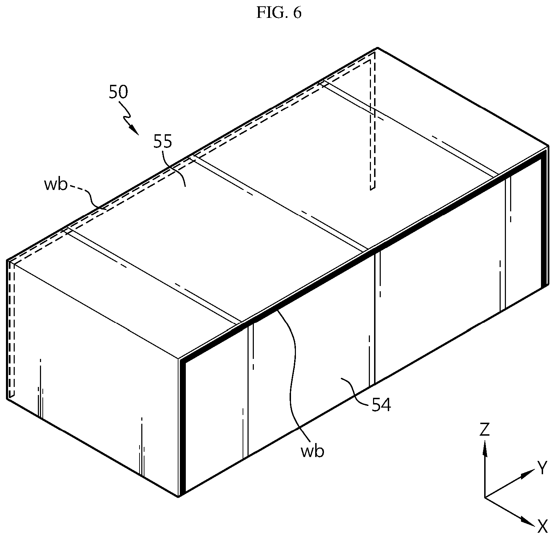

FIG. 5 is an exploded view showing a partial configuration of another battery module 50 welded by a welding device. FIG. 6 is a perspective view showing the battery module 50 of FIG. 5. Referring to FIGS. 5 and 6, a battery module 50 welded by a welding device includes a U-frame 54, a top frame 55, and a plurality of cells 53.

The U-frame 54 may have a U-shape. The U-frame 54 may be open in the vertical direction, in the front-rear direction, or in the Y-axis direction. In addition, the U-frame 54 may be open upward or in the +Z-axis direction. Also, the U-frame 54 may provide space therein. The U-frame 54 may be made of a metal material.

The top frame 55 may be fastened, coupled, or fixed to the U-frame 54. The top frame 55 and the U-frame 54 may be coupled through welding. The top frame 55 and the U-frame 54 may have space, respectively. Also, the top frame 55 and the U-frame 54 may be fastened, coupled, or fixed to form a rectangular parallelepiped shape. A welding line wb or a welding portion wb may be formed along the edge of the U-frame 54 or along the edge of the top frame 55.

A plurality of battery cells 53 may be accommodated in an inner space formed by the U-frame 54 and the top frame 55. The plurality of battery cells 53 may refer to secondary batteries. The plurality of battery cells 53 may be secondary batteries having a pouch shape. The plurality of battery cells 53 may be configured to be stacked in the inner space formed by the U-frame 54 and the top frame 55.

The welding device is configured to form a welding line wb or a welding portion wb of the battery module 50.

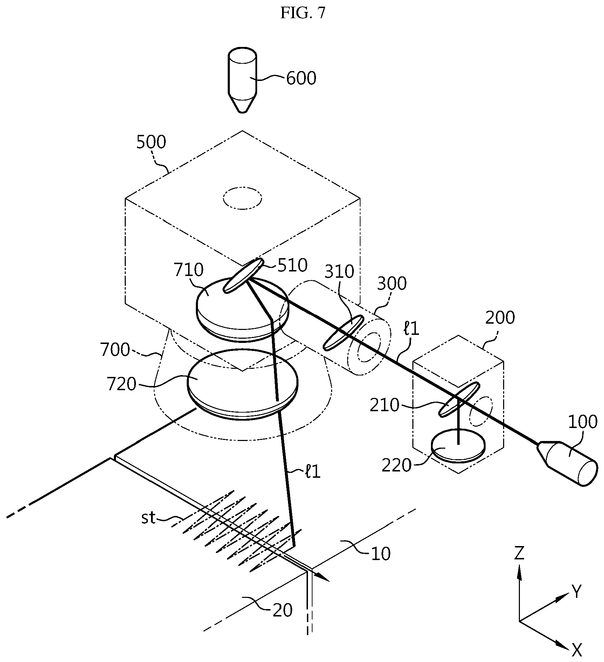

FIG. 7 is a view showing an example in which a battery module is scanned by a welding device. Referring to FIGS. 1 and 7, the processor 400 of the welding device is configured to measure a distance between the focus wf at which the scanner 500 is aimed and the scanner 500. The welding device welds the first material 10 and the second material 20. The first material 10 and the second material 20 may be made of a metal material. Also, the first material 10 and the second material 20 are in contact for welding. For example, the first material 10 and the second material 20 may be the frame 51, U-frame 54, top frame 55, or end plate 52 of the battery module 50.

The processor 400 may scan the first material 10 and the second material 20 by controlling at least one of the scanner 500 and the galvo module 300 while turning on the scan laser 100 and turning off the welding laser 600. In this case, the scan trajectory st may be formed to vibrate in the Y-axis direction around the boundary of the first material 10 and the second material 20 and proceed in the +X-axis direction. The processor 400 may sense, recognize, or search the boundary of the first material 10 and the second material 20 by measuring a distance between the focus wf of the scanner 500 and the scanner 500. Alternatively, the processor 400 may sense, recognize, or search a gap formed between the first material 10 and the second material 20.

According to this configuration, the processor 400 is configured to scan, detect, sense, or recognize the welding work line before welding. The processor 400 may perform a more sophisticated welding operation by scanning the boundaries or gaps of the plurality of materials 10, 20.

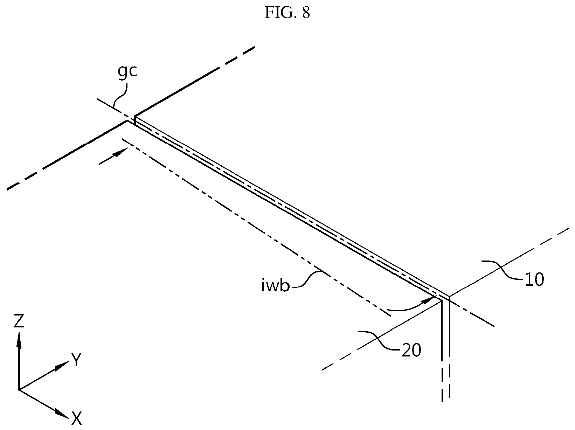

FIG. 8 is a view showing an example in which a welding line is calibrated by a welding device. Referring to FIGS. 1 and 8, the processor 400 of the welding is configured to calibrate the preset welding work line iwb based on coordinate information obtained by scanning the boundaries of the plurality of materials 10, 20.

The processor 400 is configured to include the previously established, stored, and set welding work line iwb information. In this case, the welding work line iwb information may be coordinate information on the X-Y plane. In addition, the processor 400 is configured to calibrate or update the previously established, stored, and set welding work line iwb based on coordinate information obtained by scanning the boundaries of the plurality of materials 10, 20. For example, the processor 400 may calibrate or update the existing welding work line iwb to the center line gc of the gap or boundary between the first material 10 and the second material 20. Also, the processor 400 may be configured to perform a welding operation along the calibrated or updated welding work line gc.

According to this configuration, the processor 400 may improve welding quality and reduce welding defects by calibrating or updating the welding work line iwb.

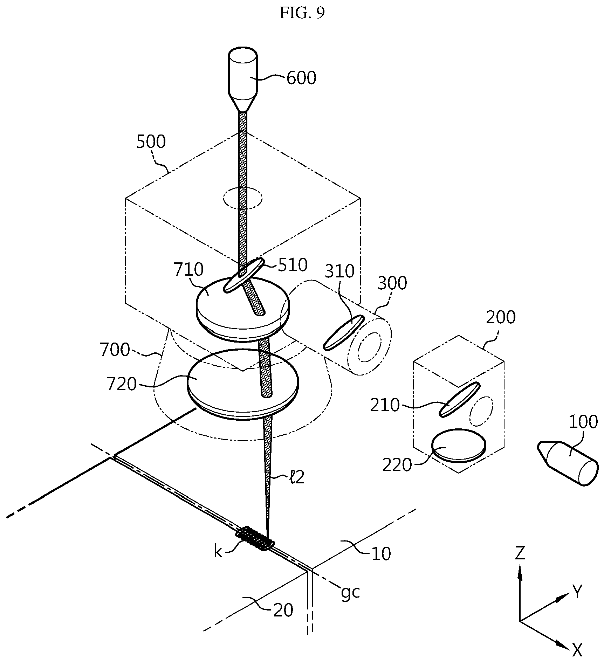

FIG. 9 is a view showing an example in which a battery module is welded by a welding device. Referring to FIGS. 1 and 9, the processor 400 of the welding device is configured to control the welding laser 600 and the scanner 500 to form a keyhole k, and to control the scan laser 100 and the galvo module 300 to scan around the keyhole k.

The processor 400 is configured to turn on the welding laser 600 and control the scanner 500 to weld the first material 10 and the second material 20. In this case, the processor 400 may control the welding laser 600 and the scanner 500 so that welding proceeds along the calibrated or updated welding work line gc. The processor 400 may form a welding spot, joint, a welding portion, or a keyhole k in the gap or boundary between the first material 10 and the second material 20.

According to this configuration, the processor 400 may perform welding by calibrating or updating the welding work line iwb, thereby improving welding quality and reducing welding defects.

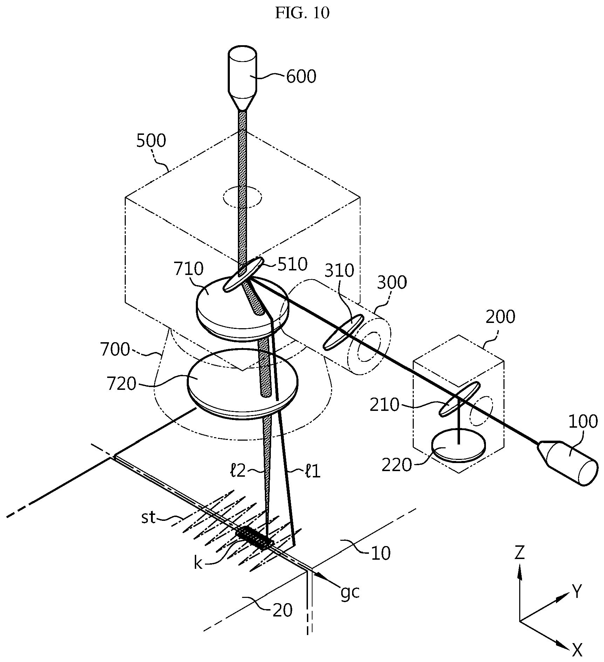

FIG. 10 is a view showing an example in which a welding portion is inspected by a welding device. Referring to FIGS. 1 and 10, the processor 400 of the welding device is configured to perform welding quality inspection while simultaneously performing welding.

While welding is in progress, the processor 400 is configured to turn on the scan laser 100 and vibrate in the Y-axis direction around the welding spot, joint, welding portion, or keyhole k to proceed with the scan. In this case, the processor 400 is configured to control the galvo module 300 to deflect the light l1 emitted from the scan laser 100. The processor 400 is configured to control at least one of the scan laser 100 and the galvo module 300 to sense or measure the penetration depth of the welding spot, j oint, welding portion, or keyhole k. The welding quality inspection may proceed along the direction of welding progress.

According to this configuration, the processor 400 may quickly sense welding defects by performing welding quality inspection while simultaneously performing welding. As a result, welding defects may be quickly corrected or the settings of the welding device may be quickly corrected.

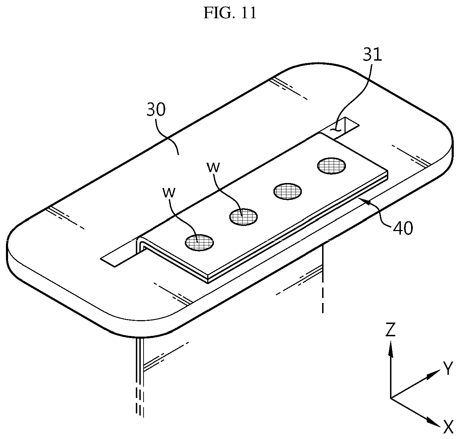

FIG. 11 is a view showing a bus bar 30 and an electrode lead 40 welded by a welding device. Referring to FIG. 11, the bus bar 30 may be physically and electrically coupled or connected to one or more electrode leads 40. The bus bar 30 may be in a configuration that is included in the battery module 50. Also, the electrode lead 40 may be in a configuration that is included in the battery cell 53. The bus bar 30 and the electrode lead 40 may be coupled by welding. The electrode lead 40 may pass through the hole 31 of the bus bar 30 and then be bent to be coupled or connected to the bus bar 30. The bus bar 30 and the electrode lead 40 may be coupled or connected through a plurality of welding spots w, joints w, or welding portions w.

According to this configuration, the welding device is configured to weld one or more electrode leads 40 to the bus bar 30.

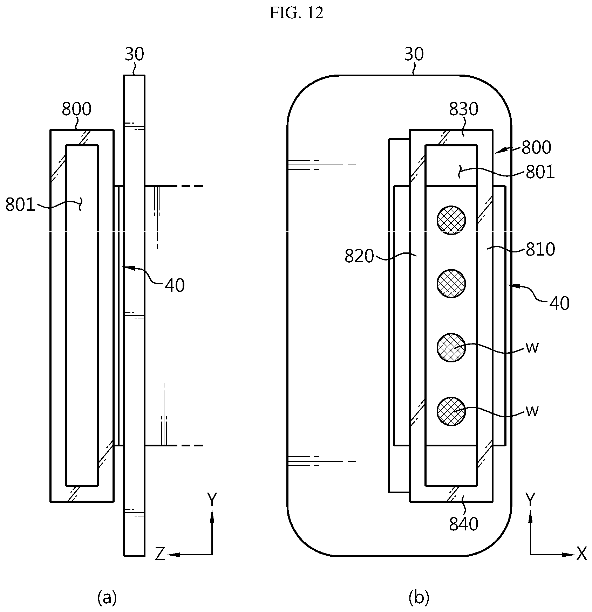

FIG. 12 is a view showing a bus bar 30 and an electrode lead 40 aligned by a welding device. FIG. 12 (a) is a view showing that the jig 800 brings the electrode lead 40 into close contact with the bus bar 30. FIG. 12 (b) is a view showing the jig 800 that brings the electrode lead 40 into close contact with the bus bar 30 when viewed from above. Referring to FIGS. 1 and 12, the welding device further includes a jig 800. The jig 800 may refer to a masking jig 800. In this case, the plurality of materials welded by the welding device include a first material and a second material laminated on the first material and exposing a portion of the upper surface of the first material. For example, the first material may be a bus bar 30, and the second material may be an electrode lead 40. Also, the jig 800 is configured to bring the second material 40 into close contact with the first material 30. For example, the jig 800 may bring the electrode lead 40 into close contact with the bus bar 30. In this case, the electrode lead 40 may be bent to be in close contact with the bus bar 30. The processor 400 is configured to control the movement of the jig 800. Also, the processor 400 is configured to form a welding portion w, a welding spot w, or a joint w that connects or couples the busbar 30 and the electrode lead 40.

In this case, the boundary of the first material 30 and the second material 40 may refer to the perimeter or edge of the second material 40 that overlaps or is stacked on the first material 30. For example, the boundary of the bus bar 30 and the electrode lead 40 may be the perimeter or edge of a portion of the electrode lead 40 that overlaps or is stacked on the bus bar 30. The processor 400 may scan the perimeter or edge of the portion of the electrode lead 40 that overlaps or is stacked on the bus bar 30.

According to this configuration, the processor 400 is configured to scan, detect, sense, or recognize the welding work line before welding. The processor 400 is configured to perform a more sophisticated welding operation by scanning the boundary of the bus bar 30 and the electrode lead 40.

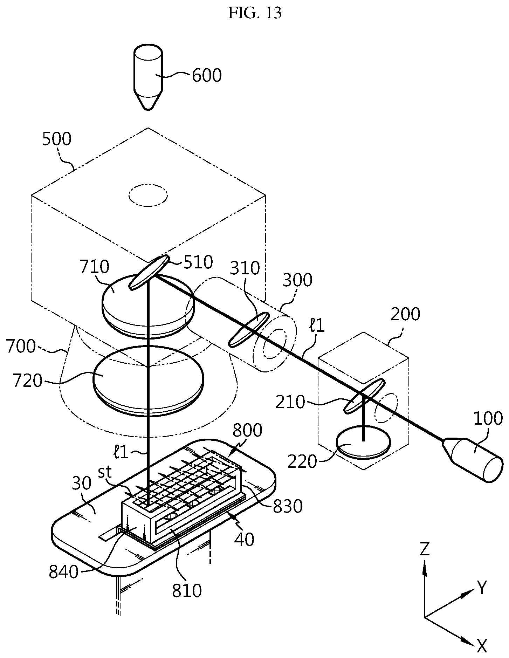

FIG. 13 is a view showing a bus bar 30 and an electrode lead 40 scanned by a welding device. Referring to FIGS. 1, 12, and 13, the jig 800 of the welding device is configured to press the electrode lead 40 and such that a hole 801 is formed to penetrate in the vertical direction. Also, the hole 801 exposes at least a portion of the electrode lead.

The processor 400 is configured to scan around the jig 800 by controlling at least one of the scanner 500 and the galvo module 300 while turning on the scan laser 100 and turning off the welding laser 600. In this case, the scan trajectory st may be formed to vibrate in the X-axis direction and proceed in the -Y-axis direction around the longitudinal direction of the jig 800, a line of symmetry with respect to the longitudinal direction of the jig 800, or an axis parallel to the Y-axis. The processor 400 may sense, recognize, or search the perimeter and position of the jig 800 by measuring a distance between the focus of the scanner 500 and the scanner 500.

According to this configuration, the processor 400 is configured to perform a more sophisticated welding operation by scanning, detecting, sensing, or recognizing the jig 800 before welding.

Referring to FIGS. 1 and 13, the jig 800 of the welding device includes a first part 810 pressing the electrode lead 40 and a second part 820 facing the first part 810. Also, the jig 800 further includes a third part 830 connecting the first part 810 and the second part 820, and a fourth part 840 connecting the first part 810 and the second part 820 and facing the third part 830. The first part 810 to the fourth part 840 are configured to form a hole 801. In addition, the first part 810 to the fourth part 840 may have a rectangular shape. Also, the first part 810 to the fourth part 840 are configured to press at least one of the electrode lead 40 and the bus bar 30.

According to this configuration, the jig 800 prevents flying products generated by the welding operation from splashing or spreading while stably pressing the electrode lead 40.

Referring to FIGS. 1 and 13, the processor 400 of the welding device is configured to calibrate the preset welding work line based on coordinate information obtained by scanning the first part 810 and the second part 820. In this case, the processor 400 is configured to calibrate the preset welding work line to the center line between the first part 810 and the second part 820.

In addition, the processor 400 is configured to calibrate the preset welding work line based on coordinate information obtained by scanning the third part 830 and the fourth part 840. In this case, the processor 400 is configured to calibrate the preset welding work line based on the center line between the third part 830 and the fourth part 840.

According to this configuration, the processor 400 is configured to calibrate or update the welding work line based on the first part 810 to the fourth part 840 of the jig 800. Since the first part 810 to the fourth part 840 form a rectangular shape, the center line between the first part 810 and the second part 820 or between the third part 830 and the fourth part 840 may improve the accuracy of calibration or update.

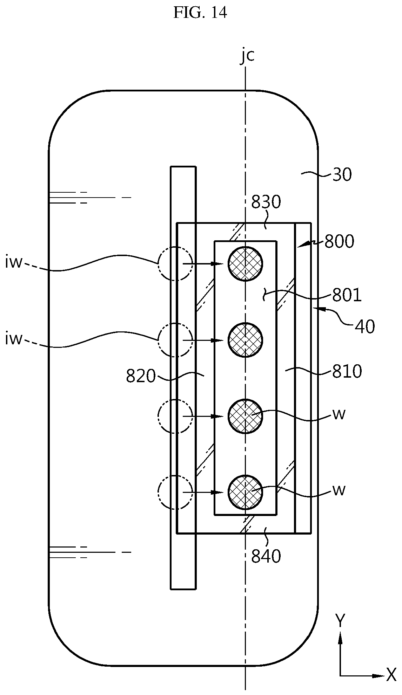

FIG. 14 is a view showing an example in which a welding line is calibrated by a welding device. Referring to FIGS. 1 and 14, the processor 400 of the welding is configured to calibrate or update the previously established, stored, and set welding work line iw by scanning, detecting, sensing, or recognizing the jig 800. For example, the processor 400 is configured to calibrate or update the existing welding work line iw to the center line jc or line of symmetry jc of the jig 800. Alternatively, the processor 400 is configured to calibrate or update the existing welding work line iw to the center line jc or line of symmetry jc between the first part 810 and the second part 820. Also, the processor 400 is configured to form a welding spot w, a joint w, or a welding portion w along the calibrated or updated welding work line jc.

According to this configuration, the processor 400 is configured to improve welding quality and reduce welding defects by calibrating or updating the welding work line iw.

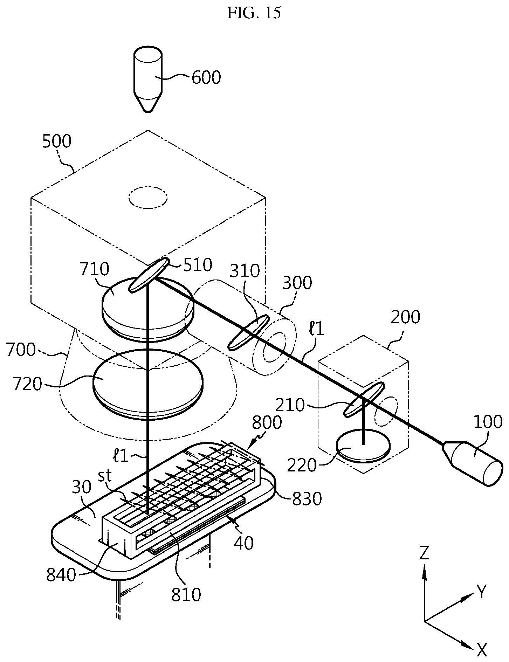

FIG. 15 is a view showing a bus bar 30 and an electrode lead 40 scanned by a welding device. Referring to FIGS. 1 and 15, the jig 800 of the welding device is configured to press the electrode lead 40 and such that a hole 801 is formed to penetrate in the vertical direction. Also, the hole 801 exposes at least a portion of the electrode lead 40 and at least a portion of the bus bar 30.

The processor 400 is configured to scan around the jig 800 by controlling at least one of the scanner 500 and the galvo module 300 while turning on the scan laser 100 and turning off the welding laser 600. In this case, the scan trajectory st may be formed to vibrate in the X-axis direction and proceed in the -Y-axis direction around the longitudinal direction of the jig 800, a line of symmetry with respect to the longitudinal direction of the jig 800, or an axis parallel to the Y-axis. The processor 400 is configured to sense, recognize, or search the perimeter and position of the jig 800 by measuring a distance between the focus of the scanner 500 and the scanner 500. In addition, the processor 400 is configured to sense, recognize, or search the boundary between the electrode lead 40 and the bus bar 30, or the edge or perimeter of the electrode lead 40 exposed through the jig 800.

According to this configuration, the processor 400 is configured to perform a more sophisticated welding operation by scanning, detecting, sensing, or recognizing the jig 800 before welding.

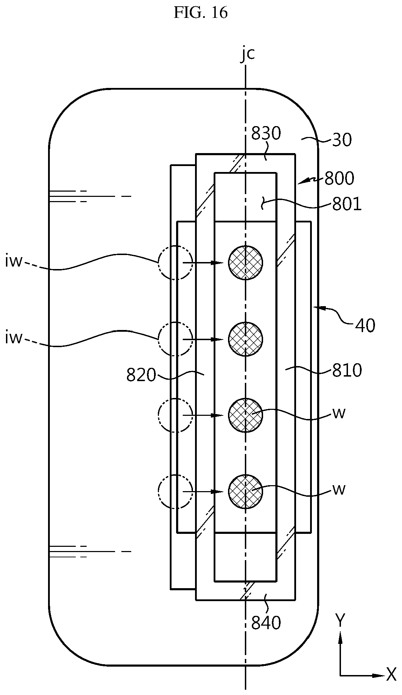

FIG. 16 is a view showing an example in which a welding line is calibrated by a welding device. Referring to FIGS. 1 and 16, the processor 400 of the welding device is configured to calibrate or update the previously established, stored, and set welding work line iw by scanning, detecting, sensing, or recognizing the jig 800. For example, the processor 400 is configured to calibrate or update the existing welding work line iw to the center line jc or line of symmetry jc of the jig 800 with respect to the Y-axis direction. Alternatively, the processor 400 is configured to calibrate or update the existing welding work line iw to the center line jc or line of symmetry jc between the first part 810 and the second part 820. Also, the processor 400 is configured to configured to form a welding spot w, a joint w, or a welding portion w along the calibrated or updated welding work line jc. In this case, the processor 400 is configured to perform calibration or update of the welding work line iw with respect to the X-axis direction.

According to this configuration, the processor improves welding quality and reduces welding defects by calibrating or updating the welding work line iw.

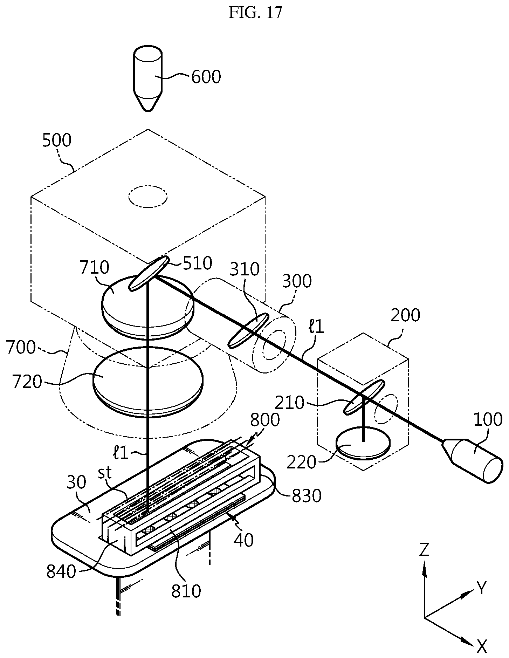

FIG. 17 is a view showing a bus bar 30 and an electrode lead 40 scanned by a welding device. Referring to FIGS. 1 and 17, the processor 400 of the welding device is configured to scan around the jig 800 by controlling at least one of the scanner 500 and the galvo module 300 while turning on the scan laser 100 and turning off the welding laser 600. In this case, the scan trajectory st may be formed to vibrate in the Y-axis direction and proceed in the +X-axis direction around the longitudinal direction of the jig 800, a line of symmetry perpendicular to the longitudinal direction of the jig 800, or an axis parallel to the X-axis. The processor 400 is configured to sense, recognize, or search the perimeter and position of the jig 800 by measuring a distance between the focus of the scanner 500 and the scanner 500. In addition, the processor 400 is configured to sense, recognize, or search the boundary between the electrode lead 40 and the bus bar 30, or the edge or perimeter of the electrode lead 40 exposed through the jig 800.

According to this configuration, the processor 400 is configured to perform a more sophisticated welding operation by scanning, detecting, sensing, or recognizing the jig 800 before welding.

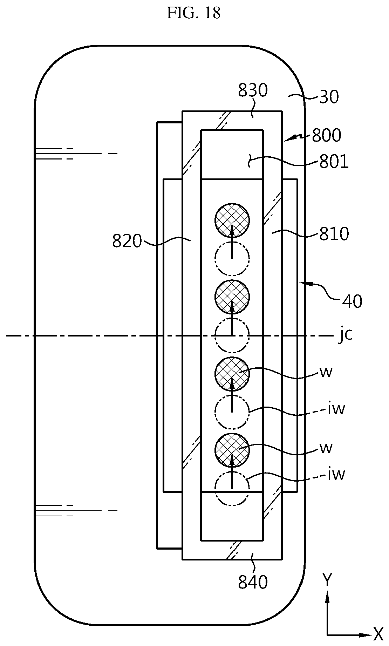

FIG. 18 is a view showing an example in which a welding line is calibrated by a welding device. The processor 400 of the welding device is configured to calibrate the preset welding work line iw based on coordinate information obtained by scanning the boundary of the bus bar 30 and the electrode lead 40. For example, the processor 400 is configured to calibrate or update the existing welding work line iw to the center line jc or line of symmetry jc of the jig 800 with respect to the X-axis direction. Alternatively, the processor 400 is configured to calibrate or update the existing welding work line iw to the center line jc or line of symmetry jc between the third part 830 and the fourth part 840. Also, the processor 400 is configured to form a welding spot w, a joint w, or a welding portion w along the calibrated or updated welding work line jc. In this case, the processor 400 is configured to perform calibration or update of the welding work line iw with respect to the Y-axis direction.

According to this configuration, the processor 400 improves welding quality and reduce welding defects by calibrating or updating the welding work line iw.

While the present invention has been hereinabove described with regard to a limited number of embodiments and drawings, the present invention is not limited thereto and it is obvious to those skilled in the art that a variety of modifications and changes may be made thereto within the scope of the present invention as defined in the appended claims.

## Claims

1. A welding device for welding a plurality of materials (10, 20) arranged to be in contact, wherein the plurality of materials (10, 20) comprises a first material; and a second material laminated on the first material and exposing a portion of the upper surface of the first material **characterized in that** said welding device comprises:
a scanner (500) configured to deflect light;
a welding laser (600) configured to emit welding light toward said plurality of materials through the scanner;
a scan laser (100) configured to emit scan light;
a galvo module (300) configured to deflect said scan light toward the scanner, said scan light being deflected further at said scanner towards said plurality of materials; and
a processor (400) configured to control at least one of the scanner and the galvo module to scan boundaries of the plurality of materials (10, 20),
said welding device comprises further a jig (800) configured to bring that the second material into close contact with the first material,
**characterised in that**
said jig includes a first part (810) pressing the electrode lead (40) and a second part (820) facing the first part (810), a third part (830) connecting the first part (810) and the second part (820), and a fourth part (840) connecting the first part (810) and the second part (820) and facing the third part (830), wherein the first part (810) to the fourth part (840) are configured to form a hole (801), and,
**in that**
the processor (400) is configured to calibrate a welding work line (iw) or update a previously established, stored, and set welding work line (iw) by scanning, detecting, sensing, or recognizing the jig (800).

2. The welding device according to claim 1,
wherein the processor (400) is configured to measure a distance between the focus at which the scanner (500) is aimed and the scanner (500).

3. The welding device according to claim 1,
wherein the processor (400) calibrates the preset welding work line based on coordinate information obtained by scanning the boundaries of the plurality of materials (10, 20).

4. The welding device according to claim 1,
wherein the processor is configured to control the welding laser and the scanner to form a keyhole (k), and to control the scan laser (100) and the galvo module (300) to scan around the keyhole.

5. The welding device according to claim 1, in combination with the first and second materials,
wherein the first material is a bus bar (30), and
the second material is an electrode lead (40) of a battery cell.

6. The welding device according to claim 5,
wherein the jig (800) is configured to press the electrode lead (40), and the hole (801) is formed to penetrate in a vertical direction,
wherein the hole is configured to expose at least a portion of the electrode lead (40) and at least a portion of the bus bar (30).

7. The welding device according to claim 6,
wherein the processor (400) calibrates the preset welding work line based on coordinate information obtained by scanning the boundary of the bus bar (30) and the electrode lead (40).

8. The welding device according to claim 1,
wherein the processor (400) calibrates the preset welding work line based on coordinate information obtained by scanning the first part (810) and the second part (820).

9. A device for manufacturing a battery cell comprising the welding device according to any one of claims 1 to 8.

10. A device for manufacturing a battery module comprising the welding device according to any one of claims 1 to 8.

11. A method for welding a plurality of materials arranged to be in contact using the welding device according to any one of claims 1 to 8, with the steps of providing a plurality of materials (10, 20) arranged to be in contact, wherein the plurality of materials (10, 20) comprises a first material, and a second material laminated on the first material and exposing a portion of the upper surface of the first material; bringing the second material into close contact with the first material by using the jig; emitting scan light by the scan laser and deflecting said scan light toward the scanner, said scan light being deflected further at said scanner towards said plurality of materials; and welding light from the welding laser toward said plurality of materials through the scanner; and controlling by the processor at least one of the scanner and the galvo module to scan boundaries of the plurality of materials, and calibrating by the processor (400) a welding work line (iw) or updating a previously established, stored, and set welding work line (iw) by scanning, detecting, sensing, or recognizing the jig (800).

## Patentansprüche

1. Schweißvorrichtung zum Schweißen einer Vielzahl von Materialien (10, 20), die so angeordnet sind, dass sie in Kontakt stehen, wobei die Vielzahl von Materialien (10, 20) ein erstes Material und ein zweites Material umfasst, das auf das erste Material laminiert ist und einen Abschnitt der oberen Oberfläche des ersten Materials freilegt, **dadurch gekennzeichnet, dass** die Schweißvorrichtung umfasst:
einen Scanner (500), der konfiguriert ist, um Licht abzulenken;
einen Schweißlaser (600), der konfiguriert ist, um Schweißlicht durch den Scanner in Richtung der Vielzahl von Materialien zu emittieren;
einen Scan-Laser (100), der konfiguriert ist, um Scan-Licht zu emittieren;
ein Galvo-Modul (300), das konfiguriert ist, um das Scan-Licht in Richtung des Scanners abzulenken, wobei das Scan-Licht am Scanner weiter in Richtung der Vielzahl von Materialien abgelenkt wird; und
einen Prozessor (400), der konfiguriert ist, um mindestens eines von dem Scanner und dem Galvo-Modul zu steuern, um Grenzen der Vielzahl von Materialien (10, 20) abzutasten,
wobei die Schweißvorrichtung ferner eine Spannvorrichtung (800) umfasst, die konfiguriert ist, um das zweite Material in engen Kontakt mit dem ersten Material zu bringen,
**dadurch gekennzeichnet, dass** die Spannvorrichtung einen ersten Teil (810), der den Elektrodenableiter (40) presst, und einen zweiten Teil (820), der dem ersten Teil (810) gegenüberliegt, einen dritten Teil (830), der den ersten Teil (810) und den zweiten Teil (820) verbindet, und einen vierten Teil (840) einschließt, der den ersten Teil (810) und den zweiten Teil (820) verbindet und dem dritten Teil (830) gegenüberliegt, wobei der erste Teil (810) bis zum vierten Teil (840) konfiguriert sind, um ein Loch (801) zu bilden, und dadurch, dass der Prozessor (400) konfiguriert ist, um eine Schweißarbeitslinie (iw) zu kalibrieren oder eine zuvor eingerichtete, gespeicherte und eingestellte Schweißarbeitslinie (iw) durch Abtasten, Erfassen, Fühlen oder Erkennen der Spannvorrichtung (800) zu aktualisieren.

2. Schweißvorrichtung nach Anspruch 1,
wobei der Prozessor (400) konfiguriert ist, um einen Abstand zwischen dem Fokus, auf den der Scanner (500) ausgerichtet ist, und dem Scanner (500) zu messen.

3. Schweißvorrichtung nach Anspruch 1,
wobei der Prozessor (400) die voreingestellte Schweißarbeitslinie auf der Grundlage von Koordinateninformationen kalibriert, die durch Abtasten der Grenzen der Vielzahl von Materialien (10, 20) erhalten werden.

4. Schweißvorrichtung nach Anspruch 1,
wobei der Prozessor konfiguriert ist, um den Schweißlaser und den Scanner zu steuern, um eine Kapillare (k) zu bilden, und um den Scan-Laser (100) und das Galvo-Modul (300) zu steuern, um um die Kapillare herum abzutasten.

5. Schweißvorrichtung nach Anspruch 1 in Kombination mit dem ersten und zweiten Material,
wobei das erste Material eine Sammelschiene (30) ist, und
das zweite Material ein Elektrodenableiter (40) einer Batteriezelle ist.

6. Schweißvorrichtung nach Anspruch 5,
wobei die Spannvorrichtung (800) konfiguriert ist, um den Elektrodenableiter (40) zu pressen, und das Loch (801) so ausgebildet ist, dass es in einer vertikalen Richtung durchdringt,
wobei das Loch konfiguriert ist, um mindestens einen Abschnitt des Elektrodenableiters (40) und mindestens einen Abschnitt der Sammelschiene (30) freizulegen.

7. Schweißvorrichtung nach Anspruch 6,
wobei der Prozessor (400) die voreingestellte Schweißarbeitslinie auf der Grundlage von Koordinateninformationen kalibriert, die durch Abtasten der Grenze der Sammelschiene (30) und des Elektrodenableiters (40) erhalten werden.

8. Schweißvorrichtung nach Anspruch 1,
wobei der Prozessor (400) die voreingestellte Schweißarbeitslinie auf der Grundlage von Koordinateninformationen kalibriert, die durch Abtasten des ersten Teils (810) und des zweiten Teils (820) erhalten werden.

9. Vorrichtung zum Herstellen einer Batteriezelle, umfassend die Schweißvorrichtung nach einem der Ansprüche 1 bis 8.

10. Vorrichtung zum Herstellen eines Batteriemoduls, umfassend die Schweißvorrichtung nach einem der Ansprüche 1 bis 8.

11. Verfahren zum Schweißen einer Vielzahl von Materialien, die so angeordnet sind, dass sie in Kontakt stehen, unter Verwendung der Schweißvorrichtung nach einem der Ansprüche 1 bis 8, mit den Schritten des Bereitstellens einer Vielzahl von Materialien (10, 20), die so angeordnet sind, dass sie in Kontakt stehen, wobei die Vielzahl von Materialien (10, 20) ein erstes Material und ein zweites Material umfasst, das auf das erste Material laminiert ist und einen Abschnitt der oberen Oberfläche des ersten Materials freilegt; des Bringens des zweiten Materials in engen Kontakt mit dem ersten Material unter Verwendung der Spannvorrichtung; des Emittierens von Scan-Licht durch den Scan-Laser und des Ablenkens des Scan-Lichts in Richtung des Scanners, wobei das Scan-Licht am Scanner weiter in Richtung der Vielzahl von Materialien abgelenkt wird; und des Schweißlichts vom Schweißlaser in Richtung der Vielzahl von Materialien durch den Scanner; und des Steuerns von mindestens einem von dem Scanner und dem Galvo-Modul durch den Prozessor, um Grenzen der Vielzahl von Materialien abzutasten, und des Kalibrierens einer Schweißarbeitslinie (iw) durch den Prozessor (400) oder des Aktualisierens einer zuvor eingerichteten, gespeicherten und eingestellten Schweißarbeitslinie (iw) durch Abtasten, Erfassen, Fühlen oder Erkennen der Spannvorrichtung (800).

## Revendications

1. Dispositif de soudage pour souder une pluralité de matériaux (10, 20) agencés pour être en contact, dans lequel la pluralité de matériaux (10, 20) comprend un premier matériau ; et un deuxième matériau stratifié sur le premier matériau et exposant une partie de la surface supérieure du premier matériau, **caractérisé en ce que** ledit dispositif de soudage comprend :
un scanner (500) configuré pour dévier la lumière ;
un laser de soudage (600) configuré pour émettre de la lumière de soudage vers ladite pluralité de matériaux à travers le scanner ;
un laser de balayage (100) configuré pour émettre de la lumière de balayage ;
un module galvo (300) configuré pour dévier ladite lumière de balayage vers le scanner, ladite lumière de balayage étant déviée davantage au niveau dudit scanner vers ladite pluralité de matériaux ; et
un processeur (400) configuré pour commander au moins l'un du scanner et du module galvo pour balayer les limites de la pluralité de matériaux (10, 20),
ledit dispositif de soudage comprend en outre un gabarit (800) configuré pour amener le deuxième matériau en contact étroit avec le premier matériau,
**caractérisé en ce que** ledit gabarit inclut une première partie (810) pressant le conducteur d'électrode (40) et une deuxième partie (820) faisant face à la première partie (810), une troisième partie (830) reliant la première partie (810) et la deuxième partie (820), et une quatrième partie (840) reliant la première partie (810) et la deuxième partie (820) et faisant face à la troisième partie (830), dans lequel de la première partie (810) à la quatrième partie (840) sont configurées pour former un trou (801), et **en ce que** le processeur (400) est configuré pour étalonner une ligne de travail de soudage (iw) ou mettre à jour une ligne de travail de soudage (iw) préalablement établie, stockée et définie en balayant, détectant, sentant ou reconnaissant le gabarit (800).

2. Le dispositif de soudage selon la revendication 1,
dans lequel le processeur (400) est configuré pour mesurer une distance entre le foyer sur lequel le scanner (500) est dirigé et le scanner (500).

3. Le dispositif de soudage selon la revendication 1,
dans lequel le processeur (400) étalonne la ligne de travail de soudage prédéfinie sur la base des informations de coordonnées obtenues en balayant les limites de la pluralité de matériaux (10, 20).

4. Le dispositif de soudage selon la revendication 1,
dans lequel le processeur est configuré pour commander le laser de soudage et le scanner pour former un capillaire (k), et pour commander le laser de balayage (100) et le module galvo (300) pour balayer autour du capillaire.

5. Le dispositif de soudage selon la revendication 1 en combinaison avec les premier et deuxième matériaux,
dans lequel le premier matériau est une barre omnibus (30), et
le deuxième matériau est un conducteur d'électrode (40) d'une cellule de batterie.

6. Le dispositif de soudage selon la revendication 5,
dans lequel le gabarit (800) est configuré pour presser le conducteur d'électrode (40), et le trou (801) est formé pour pénétrer dans une direction verticale,
dans lequel le trou est configuré pour exposer au moins une partie du conducteur d'électrode (40) et au moins une partie de la barre omnibus (30).

7. Le dispositif de soudage selon la revendication 6,
dans lequel le processeur (400) étalonne la ligne de travail de soudage prédéfinie sur la base des informations de coordonnées obtenues en balayant la limite de la barre omnibus (30) et du conducteur d'électrode (40).

8. Le dispositif de soudage selon la revendication 1,
dans lequel le processeur (400) étalonne la ligne de travail de soudage prédéfinie sur la base des informations de coordonnées obtenues en balayant la première partie (810) et la deuxième partie (820).

9. Dispositif de fabrication d'une cellule de batterie, comprenant le dispositif de soudage selon l'une quelconque des revendications 1 à 8.

10. Dispositif de fabrication d'un module de batterie, comprenant le dispositif de soudage selon l'une quelconque des revendications 1 à 8.

11. Procédé de soudage d'une pluralité de matériaux agencés pour être en contact à l'aide du dispositif de soudage selon l'une quelconque des revendications 1 à 8, avec les étapes consistant à fournir une pluralité de matériaux (10, 20) agencés pour être en contact, dans lequel la pluralité de matériaux (10, 20) comprend un premier matériau, et un deuxième matériau stratifié sur le premier matériau et exposant une partie de la surface supérieure du premier matériau ; amener le deuxième matériau en contact étroit avec le premier matériau en utilisant le gabarit ; émettre de la lumière de balayage par le laser de balayage et dévier ladite lumière de balayage vers le scanner, ladite lumière de balayage étant déviée davantage au niveau dudit scanner vers ladite pluralité de matériaux ; et de la lumière de soudage provenant du laser de soudage vers ladite pluralité de matériaux à travers le scanner ; et commander par le processeur au moins l'un du scanner et du module galvo pour balayer les limites de la pluralité de matériaux, et étalonner par le processeur (400) une ligne de travail de soudage (iw) ou mettre à jour une ligne de travail de soudage (iw) préalablement établie, stockée et définie en balayant, détectant, sentant ou reconnaissant le gabarit (800).
